**Europäisches Patentamt**

**European Patent Office**

**Office européen des brevets**

(19)

(11) Veröffentlichungsnummer: **0 511 432 A2**

## (12) EUROPÄISCHE PATENTANMELDUNG

(21) Anmeldenummer: **91119993.3**

(22) Anmeldetag: **23.11.91**

(51) Int. Cl.5: **G09F 9/35**, G02F 1/13

(30) Priorität: **27.04.91 DE 4113901**

(43) Veröffentlichungstag der Anmeldung:
**04.11.92 Patentblatt 92/45**

(84) Benannte Vertragsstaaten:
**AT BE CH DE DK ES FR GB GR IT LI LU NL SE**

(71) Anmelder: **KRONE Aktiengesellschaft**
**Beeskowdamm 3-11**
**W-1000 Berlin 37(DE)**

(72) Erfinder: **Brauer, Bernd, Dr.**
**Ramsteinweg 15c**
**W-1000 Berlin 37(DE)**

(54) Aus Flüssigkristallzellen gebildte modulare Anzeigevorrichtung.

(57) Es wird eine aus Flüssigkristallzellen gebildete modulare Anzeigevorrichtung beschrieben. Die Flüssigkristallzellen weisen jeweils eine zwischen zwei parallelen Glassubstraten (2,3) und einem deren Ränder verbindenden Dichtrahmen (8) eingeschlossene Flüssigkristallschicht (1) sowie transparente Elektroden (4,5) auf den der Flüssigkristallschicht zugewandten Flächen der Glassubstrate auf. Die Elektroden sind zur Verbindung mit einer externen Ansteuerelektronik durch den Dichtrahmen geführt und außerhalb von diesem mit einer flexiblen Leiterfolie (9) kontaktiert. Hierbei erstreckt sich der Kontaktbereich zwischen den Elektroden und der Leiterfolie senkrecht zur Ebene der Glassubstrate, so daß die Kontaktfläche in der Anzeigeebene minimale Abmessungen aufweist.

EP 0 511 432 A2

Die Erfindung betrifft eine Anzeigevorrichtung nach dem Oberbegriff des Anspruchs 1.

Großflächige Flüssigkristallanzeigen erfordern üblicherweise ein modulares System, da die technologisch realisierbaren Flächen einer Flüssigkristallmatrix begrenzt sind. Bei einer Modulbauweise jedoch stören die in der Anzeigeebene zwischen den Anzeigeelementen liegenden Kontaktierungsflächen den Betrachter erheblich.

Aus der DE 38 40 836 A1 ist eine Flüssigkristallanzeige-Anordnung mit einem Anzeigeelement mit mehreren Flüssigkristallzellen bekannt, bei der sich elektrische Anschlußstellen für die Flüssigkristallzellen zur Kante des Anzeigeelementes hin erstrecken. Mit den in der Ebene des Anzeigeelements liegenden Anschlußstellen sind leitende Bahnen eines mehrschichtigen flexiblen Verbindungsteils kontaktiert. Dieses wird um die Kante des Anzeigeelements herum aus dessen Ebene herausgebogen, so daß die in dieser Ebene durch die Kontaktierung eingenommene Fläche relativ klein gehalten ist. Jedoch wird sie immer noch als deutlich störend empfunden.

Es ist daher die Aufgabe der vorliegenden Erfindung, eine aus Flüssigkristallzellen gebildete modulare Anzeigevorrichtung, bei der die Flüssigkristallzellen jeweils eine zwischen zwei parallelen Glassubstraten und einem deren Ränder verbindenden Dichtrahmen eingeschlossene Flüssigkristallschicht aufweisen und transparente Elektroden auf den der Flüssigkristallschicht zugewandten Flächen der Glassubstrate vorgesehen sind, die zur Verbindung mit einer externen Ansteuerelektronik durch den Dichtrahmen geführt und außerhalb von diesem mit einer flexiblen Leiterfolie kontaktiert sind, zu schaffen, bei der die in der Anzeigeebene liegenden Flächen für die Kontaktierung noch kleiner gehalten sind.

Diese Aufgabe wird erfindungsgemäß gelöst durch das im kennzeichnenden Teil des Anspruchs 1 angegebene Merkmal. Vorteilhafte Weiterbildungen der erfindungsgemäßen Anzeigevorrichtung ergeben sich aus den Unteransprüchen.

Dadurch, daß sich der Kontaktbereich zwischen den Elektroden und der Leiterfolie senkrecht zur Ebene der Glassubstrate erstreckt, besitzt die Kontaktfläche in der Anzeigeebene minimale Abmessungen, so daß sie dem Betrachter kaum noch auffällt.

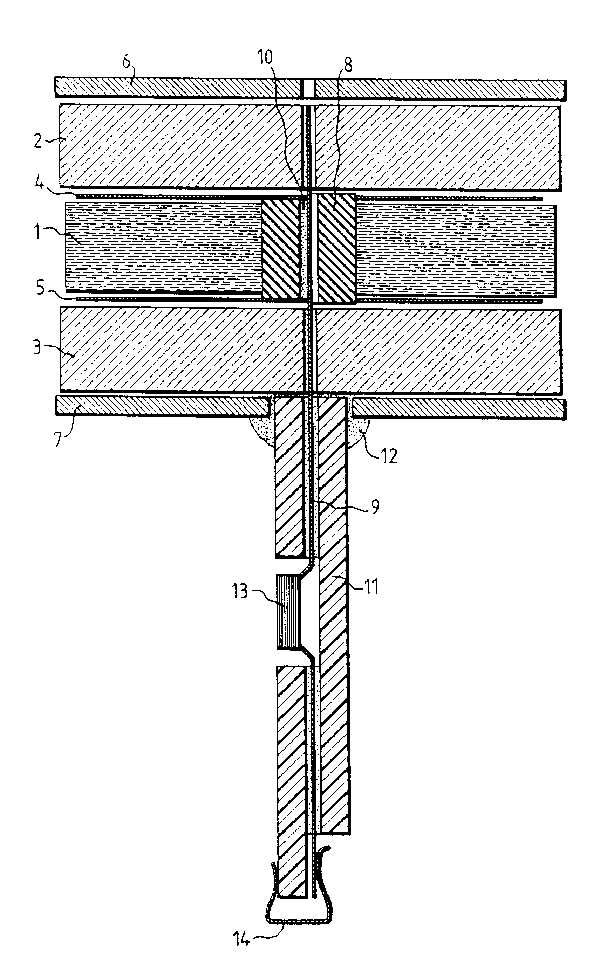

Die Erfindung wird im folgenden anhand eines in der Figur dargestellten Ausführungsbeispiels näher erläutert. Diese zeigt einen senkrechten Schnitt durch den Randbereich zweier benachbarter Flüssigkristallzellen mit einem elektrischen Anschluß für eine dieser Zellen.

Die Flüssigkristallzellen bestehen in bekannter Weise jeweils aus einem Flüssigkristall 1, zwei diesen einschließenden Glassubstraten 2 und 3, lichtdurchlässigen Elektroden 4 und 5 aus Zinn-Indium-Oxid (ITO) jeweils auf der dem Flüssigkristall 1 zugewandten Fläche der Glassubstrate 2 und 3, einem Analysator 6, einem Polarisator 7 und einem den Zwischenraum zwischen den Glassubstraten 2 und 3 am Rand abschließenden Dichtrahmen 8.

Die Glassubstrate 2 und 3 und der Dichtrahmen 8 bilden eine dichte Kammer für die Aufnahme des Flüssigkristalls 1. Die Elektroden 4 und 5 sind zum Anschluß an die Ansteuerelektronik zwischen den Glassubstraten 4 und 5 und dem Dichtrahmen 8 nach außen geführt.

Die elektrische Verbindung zwischen den Elektroden 4 und 5 und der Ansteuerelektronik erfolgt über eine flexible Leiterfolie, deren einzelne Leiterbahnen mit den Elektroden der Flüssigkristallzellen kontaktiert sind. Die Leiterfolie 9 erstreckt sich im Bereich der Flüssigkristallzellen senkrecht zur Ebene der Glassubstrate 2 und 3 bzw. zur Anzeigeebene und der Kontaktbereich zwischen den Elektroden 4 und 5 und der Leiterfolie 9 erstreckt sich ebenfalls in dieser Richtung.

Der Kontakt zwischen den Elektroden 4 und 5 und der Leiterfolie 9 kann auf verschiedene Weise hergestellt werden. In der Figur ist ein Kontaktkleber 10 gezeigt, der auf die dem Flüssigkristall 1 abgewandte Seite des Dichtrahmens 8 aufgebracht ist und damit die Elektroden 4 und 5 mit der Leiterfolie 9 verbindet. Beispielsweise können die Glassubstrate 2 und 3 auch auf den zu ihrer Ebene senkrechten Randflächen mit einer mit den Elektroden 4 und 5 in Verbindung stehenden Schicht aus Metall oder Zinn-Indium-Oxid bedampft werden und anschließend wird diese Schicht mit den Leiterbahnen der Leiterfolie 9 verlötet oder verklebt.

Eine weitere Möglichkeit besteht in der Verbindung der Elektroden 4 und 5 mit der Leiterfolie 9 durch ein Polymer, das durch Laserbestrahlung leitfähig gemacht wurde. Schließlich können anstelle der Metallbedampfung die Randflächen der Glassubstrate 2 und 3 auch mit einem leitfähigen Harz bedruckt werden.

Zur mechanischen Stabilisierung und Führung der Leiterfolie 9 dient ein kastenförmiger Halterahmen 11, der durch ein Klebmittel 12 an der Rückseite der Flüssigkristallzellen befestigt ist. Die Leiterfolie 9 ist mit dem Halterahmen 11 fest verklebt, so daß sie keinen Zugkräften unterworfen ist. In einer Aussparung des Halterahmens 11 befindet sich ein integrierter Schaltkreis 13 für die Ansteuerung, der in TAB-Technik (Tape Automatic Bonding) mit der Leiterfolie 9 kontaktiert ist. Der Halterahmen 11 ist so konzipiert, daß er in Richtung der Anzeigeebene nicht mehr Platz beansprucht als der Dichtrahmen 8. Am unteren Ende des Halterahmens 11 befindet sich ein mit der Leiterfolie 9 in Kontakt stehender Busanschluß 14.

**Patentansprüche**

1. Aus Flüssigkristallzellen gebildete modulare Anzeigevorrichtung, bei der die Flüssigkristallzellen jeweils eine zwischen zwei parallelen Glassubstraten und einem deren Ränder verbindenden Dichtrahmen eingeschlossene Flüssigkristallschicht aufweisen und transparente Elektroden auf den der Flüssigkristallschicht zugewandten Flächen der Glassubstrate vorgesehen sind, die zur Verbindung mit einer externen Ansteuerelektronik durch den Dichtrahmen geführt und außerhalb von diesem mit einer flexiblen Leiterfolie kontaktiert sind,
**dadurch gekennzeichnet,**
daß sich der Kontaktbereich zwischen den Elektroden (4,5) und der Leiterfolie (9) senkrecht zur Ebene der Glassubstrate (2,3) erstreckt.

2. Anzeigevorrichtung nach Anspruch 1, dadurch gekennzeichnet, daß die Glassubstrate (2,3) auf den zu ihrer Ebene senkrechten Randflächen eine mit den Elektroden (4,5) verbundene, elektrisch leitende Beschichtung aufweisen, die mit der Leiterfolie (9) fest verbunden ist.

3. Anzeigevorrichtung nach Anspruch 2, dadurch gekennzeichnet, daß die Randflächen der Glassubstrate (2,3) mit einer Schicht aus Metall oder dem Material der Elektroden (4,5) bedampft sind, die mit der Leiterfolie (9) verlötet oder verklebt ist.

4. Anzeigevorrichtung nach Anspruch 2, dadurch gekennzeichnet, daß die Randflächen der Glassubstrate (2,3) mit einem leitfähigen Harz bedruckt sind.

5. Anzeigevorrichtung nach Anspruch 1, dadurch gekennzeichnet, daß auf der der Flüssigkristallschicht (1) abgewandten Seite des Dichtrahmens (8) eine Kontaktkleberschicht (10) aufgebracht ist, die mit der Leiterfolie (9) in elektrischem Kontakt steht.

6. Anzeigevorrichtung nach Anspruch 1, dadurch gekennzeichnet, daß die Randflächen der Glassubstrate (2,3) und/oder die der Flüssigkristallschicht (1) abgewandten Flächen des Dichtrahmens (8) mit einem durch Laserbestrahlung in den leitfähigen Zustand gebrachten Polymer beschichtet sind, das mit der Leiterfolie (9) in elektrischem Kontakt steht.

7. Anzeigevorrichtung nach einem der Ansprüche 1 bis 6, dadurch gekennzeichnet, daß anschließend an die Flüssigkristallzelle ein kastenförmiger Halterahmen (11) zur Führung und Zugentlastung der Leiterfolie (9) vorgesehen ist.